# Europäisches Patentamt
# European Patent Office
# Office européen des brevets

(19)

(11) Veröffentlichungsnummer: **0 149 159**
**B1**

(12) ## EUROPÄISCHE PATENTSCHRIFT

(45) Veröffentlichungstag der Patentschrift:
**20.04.88**

(51) Int. Cl.⁴: **B 62 D 55/215**

(21) Anmeldenummer: **84115528.6**

(22) Anmeldetag: **15.12.84**

(54) **Verbindergleiskette.**

(30) Priorität: **16.01.84 DE 3401255**

(43) Veröffentlichungstag der Anmeldung:
**24.07.85 Patentblatt 85/30**

(45) Bekanntmachung des Hinweises auf die Patenterteilung:
**20.04.88 Patentblatt 88/16**

(84) Benannte Vertragsstaaten:
**AT BE CH DE FR GB IT LI LU NL SE**

(56) Entgegenhaltungen:
DE - A - 1 480 774
DE - B - 1 605 523
DE - B - 1 950 947
DE - C - 2 747 271
FR - A - 2 090 472
GB - A - 2 089 749
US - A - 1 774 815
US - A - 4 204 583

(73) Patentinhaber: **Hoesch Aktiengesellschaft,
Eberhardstrasse 12, D-4600 Dortmund 1 (DE)**

(72) Erfinder: **Büllesbach, Peter, Luisenstrasse 33a,
D-5632 Wermelskirchen (DE)**
Erfinder: **Steinborn, Wilhelm, Dorfmühlenstrasse 7,
D-5630 Remscheid (DE)**

(74) Vertreter: **Happe, Otto, Dipl.-Ing., Isselburger
Strasse 12, D-5000 Köln 60 (DE)**

ACTORUM AG

# Beschreibung

Die Erfindung betrifft eine mit Führungszähnen und zur Übertragung der Antriebskraft vom Kettenrad auf die Kette geeigneten Mitnehmern versehene Verbindergleiskette für Kettenfahrzeuge, deren Kettenglieder durch federnde Verbinder beweglich miteinander verbunden sind. Derartige Verbindergleisketten werden bei schnellfahrenden Kettenfahrzeugen eingesetzt. Um bei diesen Verbindergleisketten den Verschleiss der Kettenglieder zu minimieren, werden verschiedene Massnahmen zur Verhinderung einer gleitenden Reibung zwischen den Kettengliedern getroffen. Im vorliegenden Fall sind zu diesem Zweck die Verbinder federnd ausgebildet.

Bei bekannten Verbindergleisketten sind die Verbinder in der Weise federnd ausgebildet, dass zwischen den Verbinderbolzen und den Kettengliedern hohlzylindrische Torsionsblöcke aus Gummi vorgesehen sind. Hierbei wird die Kippbewegung der Kettenglieder zueinander durch die Torsion des Gummis ermöglicht. Die Führungszähne sind bei diesen Verbindergleisketten entweder auf den Verbindern (DE-B-16 05 523) oder auf den Kettengliedern (DE-B-19 50 947) angeordnet. Diese Verbindergleisketten weisen erhebliche Nachteile auf. Sie sind beispielsweise aus verhältnismässig vielen Einzelteilen gebildet. Ferner ist ihr Bauvolumen dadurch sehr gross, dass durch die begrenzte Flächenpressung des Gummis der zwischen Verbinderbolzen und Kettenglied vorgesehene Torsionsblock einen entsprechenden grossen Durchmesser aufweisen muss. Daran muss sich die gesamte Kette anpassen, so dass die einzelnen Kettenglieder ein hohes Gewicht haben.

Bei einer anderen bekannten Verbindergleiskette bestehen die Verbinder aus elastischem Werkstoff, beispielsweise Gummi, mit darin eingebetteten starren Stützkörpern (DE-PS 27 47 271). Da an den Verbindern dieser Verbindergleiskette die Führungszähne befestigt sind und somit die Verbinder die Führungskräfte auf die Kette übertragen, müssen sie entsprechend stabil ausgebildet sein. Diese Verbinder weisen daher ein erhebliches Gewicht auf.

Der Erfindung liegt die Aufgabe zugrunde, die Verbindergleiskette der eingangs genannten Art derart auszubilden, dass sie aus nur wenigen Einzelteilen besteht und nur ein geringes Gewicht aufweist, so dass sie nur eine geringe ungefederte Fannmasse besitzt. Diese Aufgabe wird durch die im Anspruch 1 angegebene Erfindung gelöst.

Bei der erfindungsgemässen Verbindergleiskette besitzt der Verbinder nur ein verhältnismässig kleines Volumen, da er nur die Zugkräfte der Kette, die sich über die gesamte Kettenbreite verteilen, zu übertragen hat. Dadurch ist es möglich, sowohl die Verbinder als auch die Kettenglieder sehr flach auszubilden, wodurch sich ein sehr geringes Gewicht der Verbindergleiskette ergibt.

Vorteilhafte Weiterbildungen der Erfindung sind in den Unteransprüchen beschrieben.

Bei der erfindungsgemässen Verbindergleiskette können die Kettenglieder auch wesentlich schmaler ausgebildet werden als bei den bekannten Verbindergleisketten, so dass sie keine hohen Durchbiegekräfte aufzunehmen haben und somit statisch und dynamisch geringer belastet sind. Das führt bei Ausnutzung der zulässigen Spannung zu einer zusätzlichen Verringerung der Höhe und einer damit verbundenen Gewichtsverminderung der Kette. Als weiterer Vorteil der geringen Breite der Kettenglieder ergibt sich ein wesentlich besserer Umschlingungseffekt der Kette am Antriebs- und am Umlenkrad. Dadurch werden hier geirngere Schlagkräfte eingeleitet, die zu einer Beruhigung des Laufwerks führen. Auch das geringe Gewicht der erfindungsgemässen Verbindergleiskette trägt wesentlich zur Verbesserung des Laufverhaltens bei. Weiterhin vorteilhaft bei der erfindungsgemässen Verbindergleiskette ist deren wesentlich grössere Variabilität.

In der Zeichnung ist ein Ausführungsbeispiel des Gegenstandes der Erfindung dargestellt. Es zeigen:

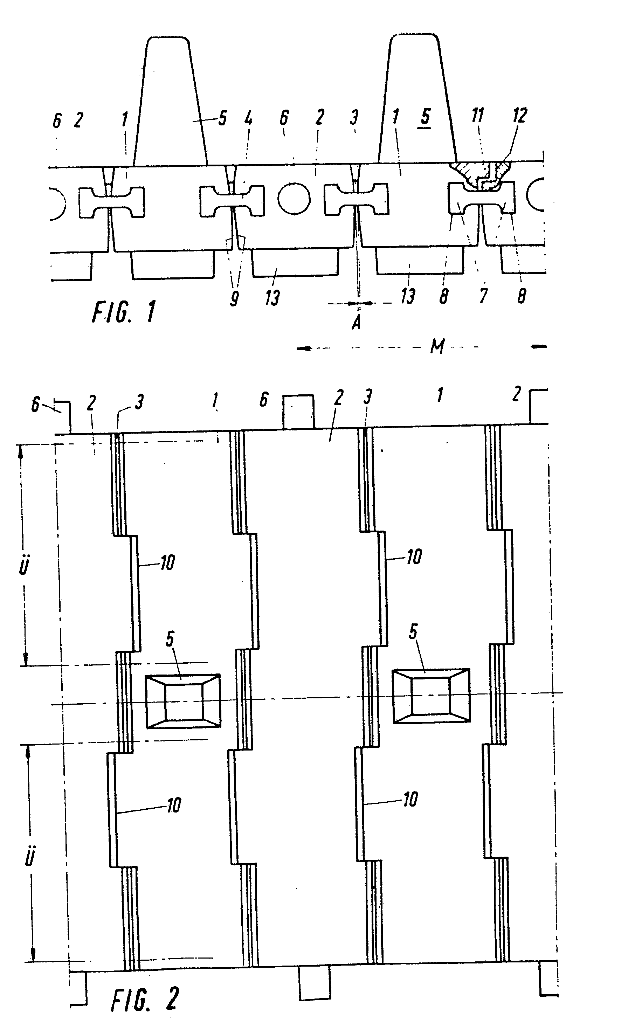

Fig. 1 einen Abschnitt einer Verbindergleiskette in Seitenansicht und

Fig. 2 den Abschnitt der Verbindergleiskette gemäss Fig. 1 in Draufsicht.

Die Verbindergleiskette ist aus Kettengliedern 1 und 2 gebildet, deren durch die Teilfuge 3 gebildeter Abstand A voneinander sehr gering ist und die durch federnde Verbinder 4 miteinander verbunden sind. Die Kettenglieder 1 sind jeweils mit einem Führungszahn 5 versehen, während die Kettenglieder 2 Mitnehmer 6 aufweisen, die zur Übertragung der Antriebskraft von dem – nicht dargestellten – Kettenantriebsrad auf die Kette dienen. Die Verbinder 4 weisen verdickte Enden 7 auf, die in entsprechende Nuten 8 der Kettenglieder 1 und 2 formschlüssig eingreifen. Der Mittenabstand M von zwei Kettengliedern 1, 2 entspricht der Teilung des – nicht dargestellten – Kettenantriebsrades. Um den Abstand A der einzelnen Kettenglieder 1, 2 voneinander möglichst gering halten zu können, ohne die notwendige Biegung der Kette um die Antriebs- und die Umlenkrolle zu beeinträchtigen, sind die aneinander angrenzenden Flächen 9 der Kettenglieder 1, 2 leicht konvex ausgebildet.

Um ein möglichst stossfreies Überrollen der Laufrollen über die Kette zu ermöglichen, ist die Teilfuge 3 zwischen den einzelnen Kettengliedern 1, 2 in ihrem oberen Bereich in der Weise versetzt ausgebildet, dass an jedem Kettenglied 1, 2 Vorsprünge 11 vorgesehen sind, die in Ausnehmungen 12 des jeweils daran angrenzenden Kettengliedes 1, 2 eingreifen. Die Versetzungsstellen 10 der Teilfuge 3 sind gegenläufig angeordnet, d.h. eine der Versetzungsstellen 10 weist nach vorn und die andere Versetzungsstelle 10 weist nach hinten, wobei sich die Versetzungsstellen 10 der Teilfuge 3 innerhalb der Überrollbereiche Ü der Kette befinden. Das hat zur Folge, dass die Stützrollen die Kettenglieder 1, 2 an drei verschiedenen Stellen an der Teilung überrollen, so dass sich die Stützrollen auch beim Überrollen der Teilung der Kettenglieder 1, 2 stets sicher auf der Oberfläche der Kettenglieder 1, 2 abstützen können. Im unteren Bereich verläuft die Trennfuge 3 geradlinig, so dass die Einschiebepolster 13 trotz der geringen Breite der Kettenglieder 1, 2 verhältnismässig breit ausgebildet werden können, wodurch ein geringer Flächendruck und damit ein geringer Verschleiss der Einschiebepolster 13 gewährleistet ist.

## Patentansprüche

1. Mit Führungszähnen und zur Übertragung der Antriebskraft vom Kettenrad auf die Kette geeigneten Mitnehmern versehene Verbindergleiskette für Kettenfahrzeuge, deren Kettenglieder durch federnde Verbinder beweglich miteinander verbunden sind, gekennzeichnet durch die Kombination folgender Merkmale:

1.1 Die federnden Verbinder (4) weisen verdickte Enden (7) auf, die in Nuten (8) der Kettenglieder (1, 2) geführt sind;

1.2 die einzelnen Kettenglieder (1, 2) haben nur einen geringen Abstand (A) voneinander;

1.3 die Führungszähne (5) und die Mitnehmer (6) sind an den Kettengliedern (1, 2) befestigt;

1.4 zwischen jeweils zwei mit einem Führungszahn (5) versehene Kettenglieder (1) ist mindestens ein Kettenglied (2) ohne Führungszahn vorgesehen.

2. Verbindergleiskette nach Anspruch 1, dadurch gekennzeichnet, dass der Mittenabstand (M) von zwei oder mehr Kettengliedern (1, 2) der Teilung des Kettenantriebsrades entspricht.

3. Verbindergleiskette nach Anspruch 1 oder 2, dadurch gekennzeichnet, dass die Teilfuge (3) zwischen den einzelnen Kettengliedern (1, 2) in ihrem oberen Bereich derart versetzt ausgebildet ist, dass an jedem Kettenglied (1, 2) vorgesehene Vorsprünge (11) in Vertiefungen (12) des daran angrenzenden Kettengliedes (1, 2) eingreifen.

4. Verbindergleiskette nach Anspruch 3, dadurch gekennzeichnet, dass die Versetzungen (10) der Teilfuge (3) über die Breite der Kette abwechselnd nach vorn und nach hinten weisen.

5. Verbindergleiskette nach Anspruch 3 oder 4, dadurch gekennzeichnet, dass sich jeweils eine Versetzung (10) der Teilfuge (3) innerhalb des Überrollbereichs (Ü) der Kette befindet.

## Revendications

1. Chenille à raccords pour véhicules à chenilles, cette chenille étant pourvue de dents de guidage et d'éléments d'entraînement appropriés pour transmettre la force d'entraînement de la roue à chaîne à la chenille, les maillons de cette chenille étant assemblés l'un à l'autre avec la possibilité de se déplacer au moyen de pièces d'assemblage élastiques, caractérisée par la combinaison des points suivants:

1.1 les pièces de raccord élastiques (4) comportent des extrémités épaissies (7) qui sont guidées dans des rainures (8) des maillons (1, 2);

1.2 les maillons individuels (1, 2) ne sont écartés l'un de l'autre que d'une faible distance (A);

1.3 les dents de guidage (5) et les éléments d'entraînement (6) sont fixés aux maillons (1, 2);

1.4 chaque fois entre deux maillons (1) comportant une dent de guidage (5), est prévu au moins un maillon (2) dépourvu de dent de guidage.

2. Chenille à raccords selon la revendication 1, caractérisée en ce que la distance de centre à centre (M) entre deux ou plusieurs maillons (1, 2) correspond au pas de la roue d'entraînement de la chenille.

3. Chenille à raccords delon la revendication 1 ou 2, caractérisée en ce que, dans sa zone supérieure, le joint (3) formé entre les différents maillons (1, 2) est réalisé de telle sorte que des saillies (11) prévues sur chaque maillon (1, 2) viennent s'engager dans des cavités (12) du maillon adjacent (1, 2).

4. Chenille à raccords selon la revendication 3, caractérisée en ce que les décalages (10) du joint (3) sont dirigés alternativement vers l'avant et vers l'arrière sur la largeur de la chaîne.

5. Chenille à raccords selon la revendication 3 ou 4, caractérisée en ce qu'un décalage (10) du joint (3) se trouve chaque fois à l'intérieur de la zone de roulement (Ü) de la chaîne.

## Claims

1. Connector caterpillar track for track-laying vehicles, provided with guide teeth and with engagement members suitable for transferring the drive force from the track wheel to the track, having track links which are movably connected to one another by resilient connectors, characterised by the combination of the following features:

1.1 the resilient connectors (4) have thickened ends (7) which are guided in grooves (8) in the track links (1, 2);

1.2 the individual track links (1, 2) have only a small spacing (A) from one another;

1.3 the guide teeth (5) and the engagement members (6) are secured to the track links (1, 2);

1.4 between each pair of track links (1) provided with a guide tooth (5), at least one track link (2) without a guide tooth is provided.

2. Connector caterpillar track according to claim 1, characterised in that the spacing (M) of the centres of two or more track links (1, 2) corresponds to the pitch of the track drive wheel.

3. Connector caterpillar track according to claim 1 or 2, characterised in that the gap (3) between the individual track links (1, 2) is staggered in its upper region such that projections (11) provided on each track link (1, 2) engage in recesses (12) in the neighbouring track link (1, 2).

4. Connector caterpillar track according to claim 3, characterised in that the displacements (10) of the gap (3) extend alternately forwardly and rearwardly over the width of the track.

5. Connector caterpillar track according to claim 3 or 4, characterised in that a respective displacement (10) of the gap (3) is provided within each roll-over region (Ü) of the track.

FIG. 1

FIG. 2